# EUROPEAN PATENT SPECIFICATION

(11) **EP 2 364 870 B1**
(45) Date of publication and mention of the grant of the patent: **20.05.2015**
(21) Application number: 10155795.7
(22) Date of filing: 08.03.2010
(51) Int. Cl.: B60J 7/19

(54) **Locking mechanism and open roof construction for a vehicle provided therewith**
Schließmechanismus und offene Dachkonstruktion für ein damit ausgestattetes Fahrzeug
Mécanisme de blocage et construction de toit ouvrant pour véhicule le comprenant

(43) Date of publication of application: 14.09.2011
(73) Proprietor: Inalfa Roof Systems Group B.V., 5804 AB Venray (NL)
(72) Inventor: Driessen, Leonardus Antonius, 5975 CE, Sevenum (NL)
(74) Representative: Voncken, Bartholomeus Maria Ch.

(56) References cited:
- EP-A2- 1 053 900
- EP-A2- 1 110 784
- CH-A- 353 635
- DE-U1- 29 717 325

## Description

The invention firstly relates to a locking mechanism according to the preamble of the main claim. Such a locking mechanism is known from EP-A-1.110.784 in which the operating handle during two successive stages pivots around two different pivot axes. It is an object of the present invention to provide an improved locking mechanism.

Thus, in accordance with the present invention a locking mechanism is provided with the features of the main claim.

One example for the application of this inventive locking mechanism is the field of so-called escape hatches for trucks. Such an escape hatch makes an emergency escape possible from within the driver's cabin in the event of an emergency situation. While locked under normal operational circumstances, the locking mechanism allows a quick release of the emergency hatch for creating an escape opening.

The present locking mechanism features improved safety provisions. The first resilient means prevent the operating handle from moving out of the first position under influence of external influences, such as for example vibrations of the truck during driving. The first force generated by the first resilient means is sufficient, at one hand, to avoid such a movement but, at the other hand, is limited to an extent for allowing an easy manipulation of the operating handle by a user in an emergency case.

The second resilient means become operative before the operating handle has reached its second position, and thus before the locking member has reached its release posttion and offer the user of the locking mechanism with an indication that he is about to completely unlock the locking mechanism. This provides a warning against an unintentional unlocking of the mechanism and offers the possibility to abort the unlocking process by reversing the pivot movement of the operating handle.

According to the invention further the first and second resilient means are dimensioned such that the second force is larger than the first force. The first force only should withstand external forces without making the operation of the mechanism difficult, whereas the second force has to prevent that the fully unlocked (release) position is reached unintentionally.

In an embodiment of the locking mechanism according to the present invention the second resilient means are constructed as non return means, such that the operating handle once pivoted to its second position cannot pivot back towards its first position beyond said second resilient means. This means that the release position, once reached, cannot be left anymore (it is conceivable, however, that the locked position may be restored by authorised personnel and/or by using specialised equipment).

In this aspect it may be of advantage when a cover is provided for making the second resilient means substantially inaccessible for a user (such that resetting the mechanism, to the locked position is not possible unless, for example, specialised equipment is used).

As an additional feature the locking mechanism according to the present invention may comprise tamper evidence means indicating that the operating handle has been pivoted out of its first position. Such tamper evidence means, which may comprise a one-way removable pin (which cannot be reinstalled after being removed) or a break pin (for example made of plastic material) indicates that the proper operation of the locking mechanism should be checked.

Constructively there are many options for devising the locking mechanism. For example the first resilient means may comprise a leaf spring defining a convex portion accommodating a concave part of the operating handle when in its first position. Further the second resilient means may comprise a leaf spring for cooperation with a projecting part of the operating handle. However, other resilient means are conceivable too.

Finally, in one embodiment the locking member is a slidable pin. But also other locking members moving longitudinally or rotationally, are possible within the scope of this invention.

The invention secondly relates to an open roof construction for a vehicle, comprising a stationary roof part, a roof opening defined in the stationary roof part and a movable panel for opening or closing said roof opening, which panel is provided with at least one movable locking member which is part of a locking mechanism according to the present invention. The locking mechanism then is an addition to a normal operating mechanism for opening and closing the panel and may be operated separately therefrom.

In one embodiment of such an open roof construction the vehicle is a truck and the panel is an escape hatch. Preferably, then, the open roof construction comprises at least two of said locking mechanisms.

Hereinafter the invention will be elucidated while referring to the drawing, in which:
Figure 1 illustrates an embodiment of the locking mechanism in the locked position;
Figure 2 illustrates said locking mechanism in the unlocked position, and
Figure 3 shows part of an open roof construction provided with two locking mechanisms.

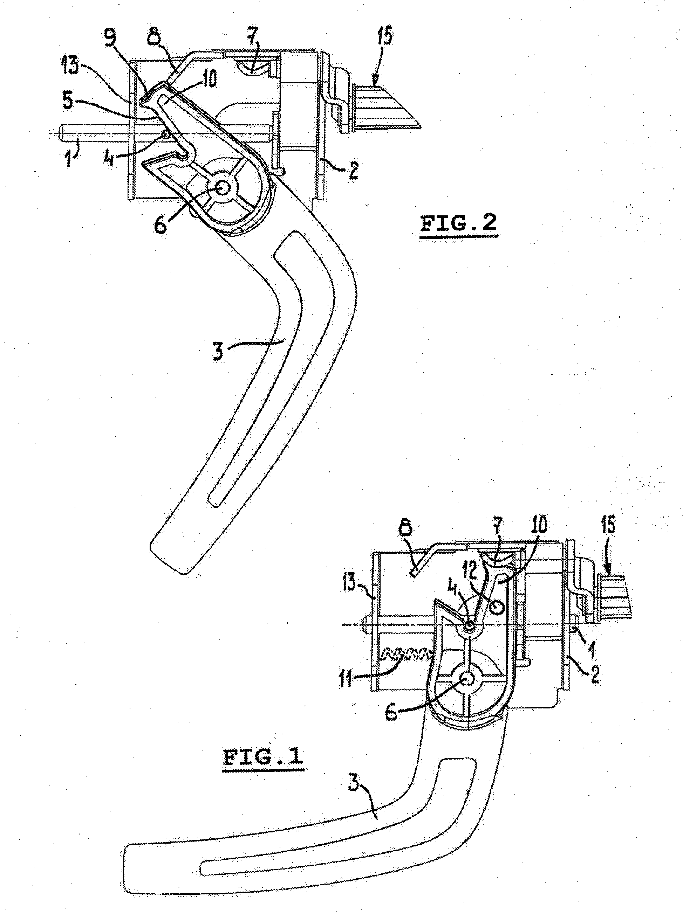

Firstly referring to figures 1 and 2, a locking mechanism comprises a locking member 1 which is movable between a locking position (figure 1) and a release position (figure 2). In the illustrated embodiment the locking member 1 is a longitudinally sliding pin which may cooperate with a locking plate 2; it is conceivable, however, that other locking members are used (translating, rotating or moving otherwise).

An operating handle 3 drivingly engages the locking member 1. In the present embodiment this engagement is realised by an engagement pin 4 attached to the locking member 1 which rides along an outer surface 5 (see figure 2) of the operating handle 3. Spring means (not illustrated) may be provided keeping the engagement pin 4 in contact with the outer surface 5.

The operating handle 3 is pivotable (pivot 6) between a first position (figure 1) in which the locking member 1 assumes its locking position and a second position (figure 2) in which the locking member 1 assumes its release (unlocked) position. Figure 1 schematically indicates the possibility of providing spring means 11 biasing the operating handle 3 towards its first position. Generally, however, such spring means 11 will not be needed.

The locking mechanism further comprises first resilient means 7 for engaging the operating handle 3 when latter is in its first position, such that a first force is required for starting to pivot the operating handle 3 from its first position towards its second position. Second resilient means 8 are provided for engaging the operating handle 3 when latter approaches its second position, such that a second force is required for pivoting the operating handle 3 completely towards its second position. The first and second resilient means 7,8 are dimensioned such that the second force is larger than the first force.

In the illustrated embodiment the first and second resilient means 7,8 comprise leaf springs. Specifically, the first resilient means 7 comprise a leaf spring defining a convex portion accommodating a concave part 9 (best seen in figure 2) of the operating handle 3 when latter is in its first position. Correspondingly the second resilient means 8 comprise a leaf spring for cooperation with a projecting part (finger) 10 of the operating handle 3.

The second resilient means 8 are constructed as non return means, such that the operating handle 3 once pivoted to its second position beyond said second resilient means 8 (which temporarily has been moved out of the track of the finger 10) cannot pivot back towards its first position beyond said second resilient means 8 (which then again has assumed its original position) because its finger 10 engages a free end of said second resilient means 8, as illustrated in figure 2. However, as long as the finger 10 has not yet moved past the free end of the second resilient means 8 (towards the position illustrated in figure 2), a return movement of the operating handle 3 is still possible and the locking member 1 has not yet reached an unlocked position during this process the unlocked release position of the locking member 1 only is achieved when the finger 10 has moved entirely past the free end of the second resilient means 8.

The locking mechanism according to the illustrated embodiment further comprises tamper evidence means 12 indicating that the operating handle 3 has been pivoted out of its first position. Such tamper evidence means may comprise a one-way removable pin (which cannot be reinstalled after being removed) or a break pin, for example made of plastic material, which can fall out of the operating handle once broken.

The locking mechanism comprises a cover 13 (only illustrated partly) for making the second resilient means 8 substantially inaccessible for a user. Resetting the locking mechanism to the first position requires access within the cover, which generally requires specialised equipment only available to authorised personnel.

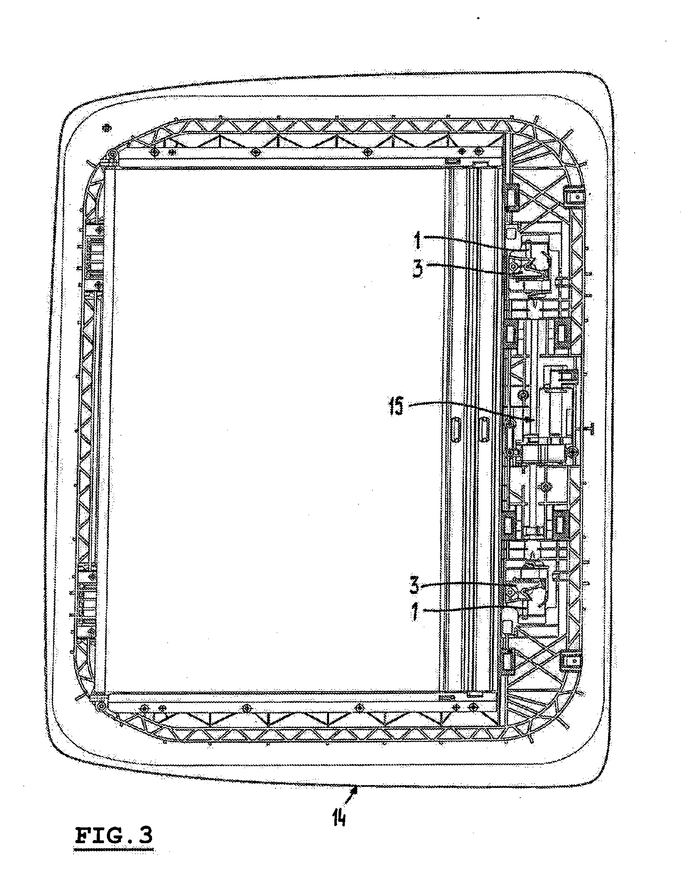

Figure 3 shows a movable panel 14 for use in an open roof construction for a vehicle. As known generally, such an open roof construction comprises a stationary roof part and a roof opening defined in said stationary roof part. The movable panel 14 is provided for at least partially opening or closing said roof opening. In the illustrated embodiment the vehicle is a truck and the panel is an escape hatch.

The panel 14 is provided with two locking mechanisms according to the present invention, of which figure 3 clearly shows part of the operating handles 3 and the movable locking members 1 driven thereby. During normal operation the panel 14 can be moved from its closed position to an open position by means of a driving mechanism 15 (manually or by an electric motor). By means of the locking mechanisms (at least part of) the panel 14 can be unlocked from and thrown out of the remainder of the open roof construction for quickly creating an escape route in case of an emergency without having to activate the driving mechanism 15.

The invention is not limited to the embodiments described before which may be varied widely within the scope of the invention as defined by the appending claims. The shape of the locking member may vary in many ways and the number of locking mechanisms provided in an open roof construction may differ from two as illustrated here. Further, the locking mechanism may be applied in other devices or apparatus apart from open roof constructions.

## Claims

1. Locking mechanism, comprising
- a locking member (1) which is movable between a locking position and a release position;
- an operating handle (3) drivingly engaging the locking member and pivotable between a first position in which the locking member assumes its locking position and a second position in which the locking member assumes its release position;
- first resilient means (7) or engaging the operating handle (3) when in its first position, such that a first force is required for starting to pivot the operating handle from its first position towards its second position, and
- second resilient means (8) for engaging the operating handle (3) when approaching its second position, such that a second force is required for pivoting the operating handle completely towards its second position, **characterized in that**
the first and second resilient means (7,8) are dimensioned such that the second force is larger than the first force, and wherein the entire pivoting of the operating handle (3) from its first position to its second position occurs around the same pivot (6).

2. Locking mechanism according to claim 1, wherein the second resilient means (8) are constructed as non return means, such that the operating handle (3) once pivoted to its second position cannot pivot back towards its first position beyond said second resilient means.

3. Locking mechanism according to claim 2, comprising a cover (13) for making the second resilient means (8) substantially inaccessible for a user.

4. Locking mechanism according to any of the previous claims, further comprising tamper evidence means (12) indicating that the operating handle (3) has been pivoted out of its first position.

5. Locking mechanism according to claim wherein the tamper evidence means comprise a one-way removable pin (12).

6. Locking mechanism according to claim 4, wherein the tamper evidence means comprise a break pin (12).

7. Locking mechanism according to any of the previous claims, wherein the first resilient means (7) comprise a leaf spring defining a convex portion accommodating a concave part (9) of the operating handle (3) when in its first position.

8. Locking mechanism according to any of the previous claims, wherein the second resilient means (8) comprise a leaf spring for cooperation with a projecting part (10) of the operating handle (3).

9. Locking mechanism according to any of the previous claims, wherein the locking member is a slidable pin (1).

10. Open roof construction for a vehicle, comprising a stationary roof part, a roof opening defined in the stationary roof part and a movable panel (14) for opening or closing said roof opening, which panel is provided with at least one movable locking member (1) which is part of a locking mechanism according to any of the previous claims.

11. Open roof construction according to claim 10, wherein the vehicle is a truck and the panel is an escape hatch.

12. Open roof construction according to claim 10 or 11, comprising at least two of said locking mechanisms.

## Patentansprüche

1. Verriegelungsmechanismus, aufweisend:
- ein Verriegelungselement (1), welches zwischen einer Verriegelungsposition und einer Löseposition bewegbar ist,
- einen Betätigungsgriff (3), der mit dem Verriegelungselement antreibend im Eingriff ist und zwischen einer ersten Position, in welcher das Verriegelungselement seine Verriegelungsposition einnimmt, und einer zweiten Position, in welcher das Verriegelungselement seine Löseposition einnimmt, schwenkbar ist,
- erste Federmittel (7) zum in Eingriff Stehen mit dem Betätigungsgriff (3), wenn dieser in seiner ersten Position ist, sodass eine erste Kraft erforderlich ist zum Beginnen, den Betätigungsgriff von seiner ersten Position aus zu seiner zweiten Position hin zu schwenken, und
- zweite Federmittel (8) zum in Eingriff Stehen mit dem Betätigungsgriff (3), wenn dieser sich seiner zweiten Position nähert, sodass eine zweite Kraft erforderlich ist zum kompletten Schwenken des Betätigungsgriffs (3) zu seiner zweiten Position hin, **dadurch gekennzeichnet, dass** die ersten und zweiten Federmittel (7, 8) derart dimensioniert sind, dass die zweite Kraft größer als die erste Kraft ist, und wobei das gesamte Schwenken des Betätigungsgriffs (3) von seiner ersten Position in seine zweite Position um den gleichen Drehpunkt (6) herum erfolgt.

2. Verriegelungsmechanismus gemäß Anspruch 1, wobei die zweiten Federmittel (8) als Nicht-Rückkehr-Mittel konstruiert sind, sodass der Betätigungsgriff (8), wenn er einmal in seine zweite Position geschwenkt ist, nicht über die zweiten Federmittel hinweg in seine erste Position zurückschwenken kann.

3. Verriegelungsmechanismus gemäß Anspruch 2, aufweisend eine Abdeckung (13), um die zweiten Federmittel (8) für einen Benutzer im Wesentlichen unzugänglich zu machen.

4. Verriegelungsmechanismus gemäß irgendeinem der vorhergehenden Ansprüche, ferner aufweisend Manipulations-Anzeigemittel (12), welche anzeigen, dass der Betätigungsgriff (3) aus seiner ersten Position heraus geschwenkt ist.

5. Verriegelungsmechanismus gemäß Anspruch 4, wobei die Manipulations-Anzeigemittel einen Ein-Weg-entfernbaren Stift (12) aufweisen.

6. Verriegelungsmechanismus gemäß Anspruch 4, wobei die Manipulations-Anzeigemittel einen Brechstift (12) aufweisen.

7. Verriegelungsmechanismus gemäß irgendeinem der vorhergehenden Ansprüche, wobei die ersten Federmittel (7) eine Blattfeder aufweisen, die einen konvexen Abschnitt definiert, der einen konkaven Teil (9) des Betätigungsgriffs (3) aufnimmt, wenn dieser in seiner ersten Position ist.

8. Verriegelungsmechanismus gemäß irgendeinem der vorhergehenden Ansprüche, wobei die zweiten Federmittel (8) eine Blattfeder aufweisen zur Zusammenwirkung mit einem vorstehenden Teil (10) des Betätigungsgriffs (3).

9. Verriegelungsmechanismus gemäß irgendeinem der vorhergehenden Ansprüche, wobei das Verriegelungselement ein verschiebbarer Stift (1) ist.

10. Offendachkonstruktion für eine Fahrzeug, mit einem stationären Dachteil, einer Dachöffnung, die in dem stationären Dachteil definiert ist, und einem bewegbaren Dachpaneel (14) zum Öffnen oder Schließen der Dachöffnung, welches Paneel mit wenigstens einem bewegbaren Verriegelungselement (1) ausgestattet ist, welches Teil eines Verriegelungsmechanismus gemäß irgendeinem der vorhergehenden Ansprüche ist.

11. Offendachkonstruktion gemäß Anspruch 10, wobei das Fahrzeug ein Lastkraftwagen ist und das Paneel eine Fluchtwegklappe ist.

12. Offendachkonstruktion gemäß Anspruch 10 oder 11, aufweisend wenigstens zwei der Verriegelungsmechanismen.

## Revendications

1. Mécanisme de verrouillage, comprenant
- un élément de verrouillage (1) qui est mobile entre une position de verrouillage et une position de libération ;
- un manche fonctionnel (3) mettant en prise par entraînement l'élément de verrouillage et pouvant pivoter entre une première position, dans laquelle l'élément de verrouillage adopte sa position de verrouillage et une seconde position, dans laquelle l'élément de verrouillage adopte sa position de libération ;
- des premiers moyens élastiques (7) pour la mise en prise du manche fonctionnel (3) lorsqu'il est dans sa première position de sorte qu'une première force soit requise pour débuter le pivotement du manche fonctionnel de sa première position vers sa seconde position, et
- des seconds moyens élastiques (8) pour la mise en prise du manche fonctionnel (3) lorsqu'il approche de sa seconde position de sorte qu'une seconde force soit requise pour le pivotement complet du manche fonctionnel vers sa seconde position, **caractérisé en ce que** les premiers et seconds moyens élastiques (7, 8) sont dimensionnés de sorte que la seconde force soit plus grande que la première force, et dans lequel le pivotement entier du manche fonctionnel (3) de sa première position à sa seconde position survient autour du même pivot (6).

2. Mécanisme de verrouillage selon la revendication 1, dans lequel les seconds moyens élastiques (8) sont construits comme des moyens de non-retour de sorte que le manche fonctionnel (3), une fois pivoté dans sa seconde position, ne puisse pas repivoter vers sa première position au-delà desdits seconds moyens élastiques.

3. Mécanisme de verrouillage selon la revendication 2, comprenant un couvercle (13) pour rendre les seconds moyens élastiques (8) sensiblement inaccessibles pour un utilisateur.

4. Mécanisme de verrouillage selon l'une quelconque des revendications précédentes, comprenant en outre des moyens témoins d'intégrité (12) indiquant que le manche fonctionnel (3) a été pivoté de sa première position.

5. Mécanisme de verrouillage selon la revendication 4, dans lequel les moyens témoins d'intégrité comprennent une goupille (12) amovible unidirectionnelle.

6. Mécanisme de verrouillage selon la revendication 4, dans lequel les moyens témoins d'intégrité comprennent une goupille de retenue (12).

7. Mécanisme de verrouillage selon l'une quelconque des revendications précédentes, dans lequel les premiers moyens élastiques (7) comprennent un ressort à lames définissant une partie convexe logeant une partie concave (9) du manche fonctionnel (13) lorsqu'il est dans sa première position.

8. Mécanisme de verrouillage selon l'une quelconque des revendications précédentes, dans lequel les seconds moyens élastiques (8) comprennent un ressort à lames pour la coopération avec une partie en saillie (10) du manche fonctionnel (3).

9. Mécanisme de verrouillage selon l'une quelconque des revendications précédentes, dans lequel l'élément de verrouillage est une tige coulissante (1).

10. Construction de toit ouvert pour un véhicule, comprenant une partie de toit stationnaire, une ouverture de toit définie dans la partie de toit stationnaire et un panneau mobile (14) pour l'ouverture ou la fermeture de ladite ouverture de toit, lequel panneau est doté d'au moins un élément de verrouillage mobile (1) qui fait partie d'un mécanisme de verrouillage selon l'une quelconque des revendications précédentes.

11. Construction de toit ouvert selon la revendication 10, dans laquelle le véhicule est un camion et le panneau est une trappe d'évacuation.

12. Construction de toit ouvert selon la revendication 10 ou 11, comprenant au moins deux desdits mécanismes de verrouillage.
